# EUROPEAN PATENT APPLICATION

(11) **EP 4 600 538 A1**
(43) Date of publication of application: **13.08.2025**
(21) Application number: 23914922.2
(22) Date of filing: 31.10.2023
(51) Int. Cl.: F16M 11/04

(54) **STAND AND DISPLAY APPARATUS**

(30) Priority: 04.01.2023 KR 20230001427; 27.01.2023 KR 20230010994
(71) Applicant: Samsung Electronics Co., Ltd., Suwon-si, Gyeonggi-do 16677 (KR)
(72) Inventor: PARK, Jin, Suwon-si Gyeonggi-do 16677 (KR)
(74) Representative: Appleyard Lees IP LLP
(86) International application number: PCT/KR2023/017104
(87) International publication number: WO 2024/147458

(57) **Abstract**

A display apparatus may comprise: a display; a control apparatus which is connectable to the display; a stand which is provided so as to enable mounting the control apparatus thereon. The control apparatus may comprise mounting holes which are formed in the side thereof facing the stand. The stand may comprise: a stand body; and a bolt protruding from the stand body and configured to be inserted into the mounting holes and to support the control device on the stand body.

## Description

### [Technical Field]

The present disclosure relates to a stand and a display apparatus.

### [Background Art]

A display apparatus is an output device that converts electrical information into visual information and displays the visual information to a user. The display apparatus may include not only televisions and monitors, but also portable devices such as notebook PCs, smart phones, and tablet PCs.

For example, the display apparatus may include a display on which image information is displayed, a control device connectable to the display, and a stand for supporting the display and/or the control device.

In the recent display apparatus, a thickness of displays has been reduced.

### [Disclosure]

### [Technical Problem]

The present disclosure is directed to providing a stand and a display apparatus having improved usability.

Further, the present disclosure is directed to providing a stand and a display apparatus capable of easily mounting a control device.

Further, the present disclosure is directed to providing a stand and a display apparatus capable of stably mounting a control device.

Further, the present disclosure is directed to providing a stand and a display apparatus capable of preventing separation of a control device.

Further, the present disclosure is directed to providing a stand and a display apparatus having a cost-effectiveness.

Further, the present disclosure is directed to providing a stand and a display apparatus having a slim design.

Further, the present disclosure is directed to providing a stand and a display apparatus having a simple appearance.

Additional aspects of the disclosure will be set forth in part in the description which follows and, in part, will be obvious from the description, or may be learned by practice of the disclosure.

### [Technical Solution]

One aspect of the present disclosure provides a display apparatus including: a display; a control device connectable to the display; and a stand configured to support the control device. The control device includes a mounting hole formed on one side thereof facing the stand. The stand includes a stand body; and a bolt protruding from the stand body and configured to be inserted into the mounting hole and to support the control device on the stand body to prevent the control device from being separated from the stand body.

Another aspect of the present disclosure provides a display apparatus including: a display; a control device connectable to the display; and a stand including a stand body provided to support one side of the control device and a holder protruding from the stand body. The control device includes a mounting hole removably coupled to the holder. The mounting hole includes a first opening; and a second opening extending downward from the first opening and larger than the first opening. The control device is positioned within the first opening while moving downward in a state in which the second opening and the holder correspond to each other.

Another aspect of the present disclosure provides a stand provided to support a control device. The control device includes a case and a mounting hole formed on one side of the case. The stand includes a stand body, a coupling hole formed to penetrate the stand body, and a bolt provided to be fixed to the coupling hole and provided to correspond to the mounting hole. The bolt includes a first bolt body provided in the coupling hole. The bolt includes a second bolt body extending from the first bolt body. The bolt includes a bolt head extending from the second bolt body. The second bolt body is provided in the mounting hole. The bolt head is provided in the case by passing through the mounting hole.

### [Description of Drawings]

FIG. 1 is a perspective view of an example of a display apparatus according to one embodiment.
FIG. 2 illustrates the display apparatus illustrated in FIG. 1 when viewed from another direction.
FIG. 3 is a perspective view of an example of a stand and a control device according to one embodiment.
FIG. 4 illustrates the stand and the control device illustrated in FIG. 3 when viewed from another direction.
FIG. 5 illustrates a state in which the stand and the control device illustrated in FIG. 3 are separated.
FIG. 6 is an exploded view of an example of the control device according to one embodiment.
FIG. 7 illustrates the control device illustrated in FIG. 6 when viewed from another direction.
FIG. 8 illustrates one surface of the control device according to one embodiment.
FIG. 9 is an enlarged view of a portion A illustrated in FIG. 8.
FIG. 10 illustrates a process of coupling a holder to a stand body.
FIG. 11 illustrates a process of mounting the control device on the stand.
FIG. 12 is a cross-sectional view of an example of the stand and the control device according to one embodiment.
FIG. 13 is an enlarged view of a portion B illustrated in FIG. 12.
FIG. 14 illustrates a state in which the control device is separated from the stand.
FIG. 15 illustrates a state in which the control device illustrated in FIG. 14 returns to its original position.
FIG. 16 is a perspective view of an example of a stand and a control device according to one embodiment.
FIG. 17 is a perspective view of an example of a stand and a control device according to one embodiment.
FIG. 18 is a perspective view of an example of a stand and a control device according to one embodiment.
FIG. 19 is a perspective view of an example of a stand and a control device according to one embodiment.
FIG. 20 is a perspective view of an example of a stand and a control device according to one embodiment.

### [Modes of the Invention]

The various embodiments and the terms used therein are not intended to limit the technology disclosed herein to specific forms, and the disclosure should be understood to include various modifications, equivalents, and/or alternatives to the corresponding embodiments.

In describing the drawings, similar reference numerals may be used to designate similar constituent elements.

A singular expression may include a plural expression unless otherwise indicated herein or clearly contradicted by context.

The expressions "A or B," "at least one of A or/and B," or "one or more of A or/and B," A, B or C," "at least one of A, B or/and C," or "one or more of A, B or/and C," and the like used herein may include any and all combinations of one or more of the associated listed items.

The term of "and / or" includes a plurality of combinations of relevant items or any one item among a plurality of relevant items.

Herein, the expressions "a first", "a second", "the first", "the second", etc., may simply be used to distinguish an element from other elements, but is not limited to another aspect (importance or order) of elements.

When an element (e.g., a first element) is referred to as being "(functionally or communicatively) coupled," or "connected" to another element (e.g., a second element), the first element may be connected to the second element, directly (e.g., wired), wirelessly, or through a third element.

In this disclosure, the terms "including", "having", and the like are used to specify features, numbers, steps, operations, elements, components, or combinations thereof, but do not preclude the presence or addition of one or more of the features, elements, steps, operations, elements, components, or combinations thereof.

When an element is said to be "connected", "coupled", "supported" or "contacted" with another element, this includes not only when elements are directly connected, coupled, supported or contacted, but also when elements are indirectly connected, coupled, supported or contacted through a third element.

Throughout the description, when an element is "on" another element, this includes not only when the element is in contact with the other element, but also when there is another element between the two elements.

In the following detailed description, the terms of "front and rear direction", "front side", "rear side" "lateral side", "left and right direction", "right side", "left side", "up and down direction", "upper side", "lower side", and the like may be defined by the drawings, but the shape and the location of the element is not limited by the term. For example, the X direction may be defined as the front and rear direction. For example, the Y direction may be defined as the left and right direction (lateral side). For example, the Z direction may be defined as the up and down direction (vertical direction). For example, the +X direction may be defined as the front side and the -X direction may be defined as the rear side. For example, the +Y direction may be defined as the right side and the -Y direction may be defined as the left side. For example, the +Z direction may be defined as the upper side, and the -Z direction may be defined as the lower side.

Hereinafter exemplary embodiments of the present disclosure will be described in detail with reference to the accompanying drawings.

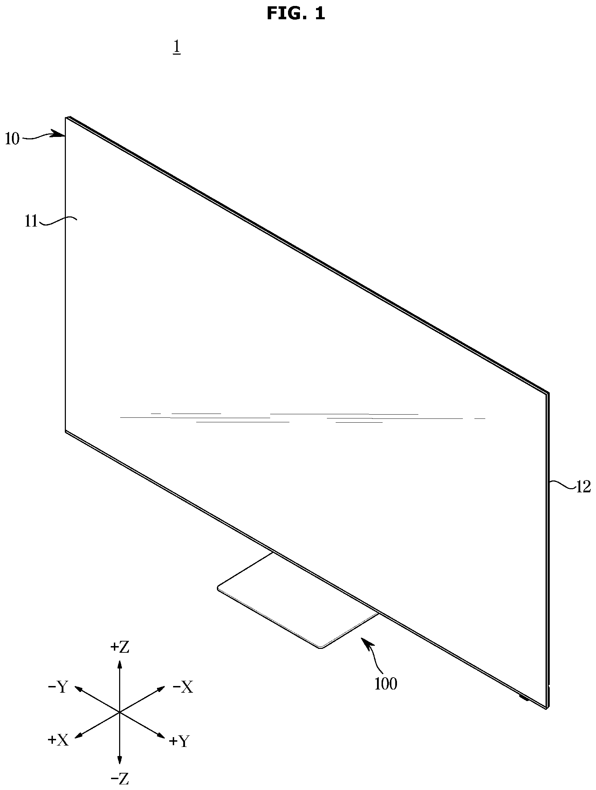

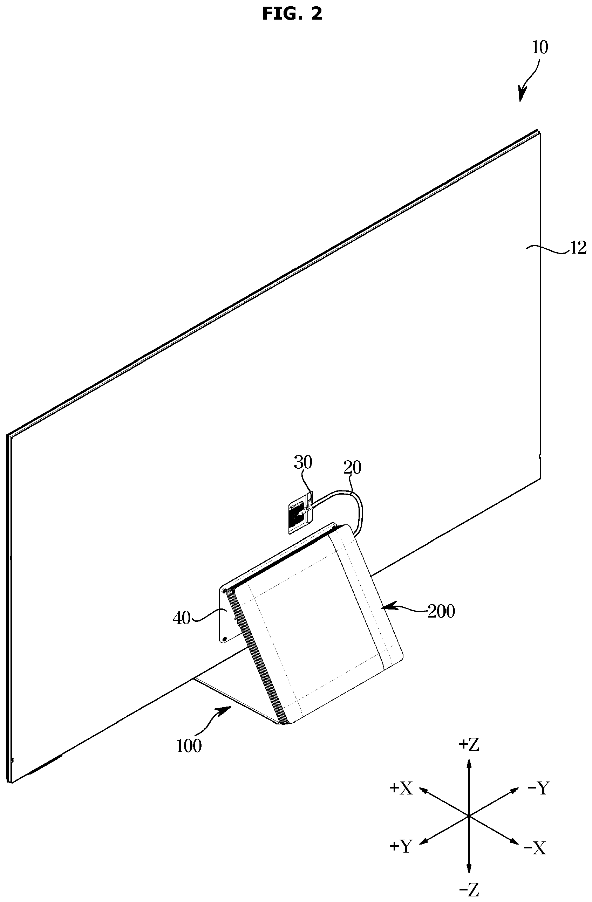

FIG. 1 is a perspective view of an example of a display apparatus according to one embodiment. FIG. 2 illustrates the display apparatus illustrated in FIG. 1 when viewed from another direction.

The display apparatus 1 may display information, data, and the like in the form of characters, figures, graphs, images, etc. The display apparatus 1 may process image signals received from the outside and visually display the processed images.

In the following, the display apparatus 1 is exemplified as a television (TV), but is not limited thereto. For example, the display apparatus 1 may be implemented as various devices such as a PC, mobile, or digital signage.

The display apparatus 1 may include a display 10.

The display 10 may include a display panel 11 on which an image is displayed. The display 10 may include a chassis 12 for supporting and/or fixing the display panel 11. For example, the chassis 12 may cover a rear surface of the display panel 11. For example, the chassis 12 may be provided in the form of an assembly to which a plurality of components is coupled. For example, the chassis 12 may be referred to as a case, a frame, a mold, a cover, etc.

Although not shown in the drawing, the display 10 may include a light source module configured to supply light to the display panel 11. For example, the display 10 may include a light guide plate provided to guide light emitted from the light source module to the display panel 11. For example, the display 10 may include a reflective sheet arranged behind the light guide plate to reflect the light forward. For example, the display may include an optical sheet provided to improve optical characteristics of the light guided to the display panel 11. For example, the optical sheet may be arranged between the display panel 11 and the light guide plate. For example, the optical sheet may include a diffusion sheet, a prism sheet, and/or a protective sheet.

For example, the display 10 may be a light-receiving (non-emissive) display. However, the present disclosure is not limited thereto, and the display 10 may also be an emissive display.

The display apparatus 1 may include a control device 200. The control device 200 may be provided to be connectable to the display 10.

The control device 200 may be configured to supply power to the display 10. The control device 200 may transmit power supplied from the outside to the display 10. The control device 200 may be configured to connect the display 10 and an external device. The control device 200 may be configured to connect the display 10 and a peripheral device (e.g., a set-top box, audio, PC, game console, etc.). The control device 200 may perform a function of supplying power to the display 10 and connecting the display 10 and a peripheral device at the same time.

However, the present disclosure is not limited to the above-described example, and the control device 200 may be provided as a separate electronic device rather than a device for connection to the display 10. For example, the control device 200 may include various electronic devices such as a computer, a mobile phone, an MP3 player, a television, a computer monitor, a tablet, a calculator, a radio, a control box, etc. In this case, the control device 200 may be provided as a separate component rather than a component corresponding to a component of the display apparatus 1.

The control device 200 may be referred to as a control box 200, a connecting device 200, a connecting box 200, an electronic device 200, etc.

Hereinafter for convenience of description, an example in which the control device 200 is a device connectable to the display 10 will be described. However, this is merely exemplary.

A cable 20 may be provided to connect the display 10 and the control device 200. The cable 20 may be configured to transmit images, audio, video, IR signals, etc. between the display 10 and the control device 200.

For example, the display 10 and the control device 200 may be connected through a single cable 20. As a result, complex connection lines are not required between the display 10 and the control device 200, and thus an excellent appearance may be created. However, the present disclosure is not limited thereto, and in some cases, a plurality of cables 20 may be provided.

For example, a cable connection portion 30 for installing the cable 20 may be formed in the chassis 12. The cable 20 connected to the cable connection portion 30 of the display 10 may connect the display 10 and the control device 200.

The display apparatus 1 may include a stand 100 on which the control device 200 is mounted. One side of the stand 100 may be provided to support the control device 200.

For example, the other side of the stand 100 may be provided to support the display 10. For example, the stand 100 may be removably coupled to a bracket 40 provided on a rear surface of the display 10, thereby allowing the stand 100 to support the display 10.

However, the present disclosure is not limited to the above-described example, and the stand 100 may be provided so as not to support the display 10. For example, the display 10 may be provided to be hung on a wall, and the stand 100 and the control device 200 may be provided in separate spaces (e.g., a floor, a storage box, etc.). For example, the display 10 may be supported by a separate display stand. For example, the chassis 12 may further include a display stand.

Meanwhile, when the control device 200 is provided as a separate component rather than as a component of the display apparatus 1, the stand 100 may also be provided as a separate component rather than as a component of the display apparatus 1. The stand 100 may be provided as a member for mounting various electronic devices.

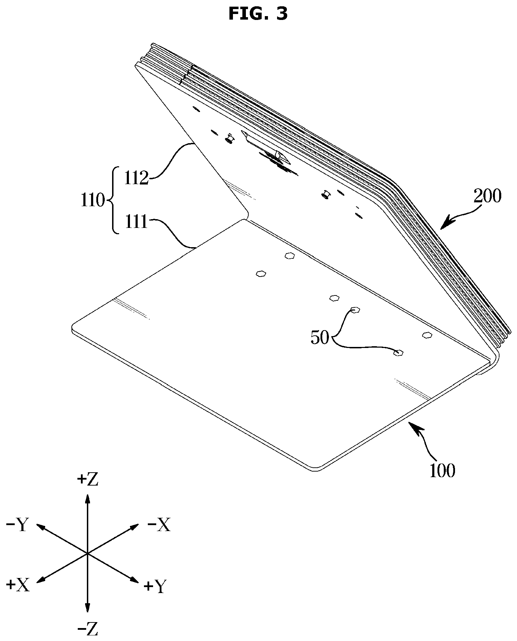

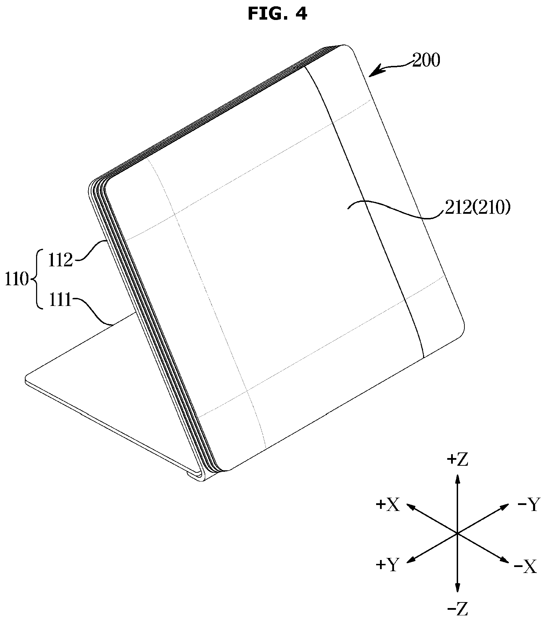

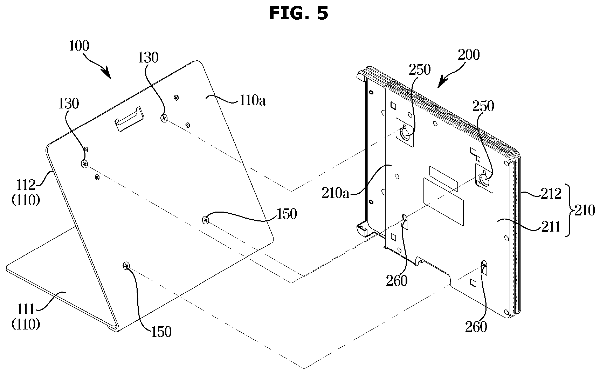

FIG. 3 is a perspective view of an example of a stand and a control device according to one embodiment. FIG. 4 illustrates the stand and the control device illustrated in FIG. 3 when viewed from another direction. FIG. 5 illustrates a state in which the stand and the control device illustrated in FIG. 3 are separated.

Referring to FIGS. 3 to 5, the stand 100 may be provided to mount the control device 200. The stand 100 may be provided to support the control device 200. The stand 100 may be provided to be removably coupled to the control device 200. The control device 200 may be provided to be hung on the stand 100.

The stand 100 may include a stand body 110. The stand body 110 may be provided to correspond to one side 210a of the control device 200. The stand body 110 may be provided to support the one side 210a of the control device 200. The stand body 110 may be provided to come into contact with the one side 210a of the control device 200.

For example, the stand body 110 may include a base 111 and a support body 112. The base 111 may be supported by a floor. The support body 112 may form one side 110a for supporting the control device 200. The support body 112 may extend upward from the base 111. The support body 112 may be provided at an angle relative to the base 111. However, the support body 112 may also be provided to be substantially perpendicular to the base 111.

For example, the base 111 and the support body 112 may be removably coupled. For example, the base 111 and the support body 112 may be distributed in a separated state, and then assembled. For example, the base 111 and the support body 112 may be fastened by a fastening member 50. However, the present disclosure is not limited thereto, and the base 111 and the support body 112 may be formed integrally. For example, the base 111 and the support body 112 may be formed together in one process.

The stand 100 may include a first holder 130. The first holder 130 may allow the control device 200 to be mounted on the stand 100. The first holder 130 may allow the control device 200 to be supported on the stand body 110. The first holder 130 may prevent the control device 200 supported on the stand body 110 from being separated from the stand body 110. The first holder 130 may fix the control device 200 to the stand 100.

The first holder 130 may protrude from the stand body 110. The first holder 130 may protrude from the stand body 110 toward the control device 200. The first holder 130 may protrude from the stand body 110 toward the one side 210a of the control device 200.

The first holder 130 may be provided to correspond to a mounting hole 250 of the control device 200 to be described later. The first holder 130 may be provided to be positioned within the mounting hole 250. When the control device 200 is mounted on the stand 100, the first holder 130 may be provided to be positioned within the mounting hole 250. The first holder 130 may be provided to be positioned within the mounting hole 250 to support the control device 200. A detailed description thereof will be described later.

At least one first holder 130 may be provided. For example, a single first holder 130 may be provided. For example, a plurality of the first holders 130 may be provided. In FIG. 5, it is illustrated that two first holders 130 are provided, but the number of the first holders 130 is not limited thereto.

For example, the first holder 130 may be provided as a bolt. The first holder 130 may be referred to as a first bolt 130.

The stand 100 may include a second holder 150. The second holder 150 may be provided to restrict movement of the control device 200 while the control device 200 is mounted on the stand 100. For example, the second holder 150 may be provided to prevent rotation of the control device 200 while the control device 200 is mounted on the stand 100.

The second holder 150 may protrude from the stand body 110. The second holder 150 may protrude from the stand body 110 toward the control device 200. The second holder 150 may protrude from the stand body 110 toward the one side 210a of the control device 200.

The second holder 150 may be provided to correspond to a stopper 260 of the control device 200 to be described later. The second holder 150 may be provided to be positioned within the stopper 260. When the control device 200 is mounted on the stand 100, the second holder 150 may be provided to be positioned within the stopper 260. The second holder 150 may be provided to be positioned within the stopper 260 to restrict the movement of the control device 200. A detailed description thereof will be described later.

At least one second holder 150 may be provided. For example, a single second holder 150 may be provided. For example, a plurality of the second holders 150 may be provided. **In** FIG. 5, it is illustrated that two second holders 150 are provided but the number of second holders 150 is not limited thereto.

For example, the second holder 150 may be provided as a bolt. The second holder 150 may be referred to as a second bolt 150.

The ordinal numbers "first" and "second" in the first holder 130 and the second holder 150 do not limit the configurations of the first holder 130 and the second holder 150. For example, the first holder 130 and the second holder 150 may be named oppositely as the second holder 130 and the first holder 150.

The control device 200 may include a mounting hole 250. The mounting hole 250 may be formed on one side of the control device 200. The mounting hole 250 may be formed on the one side 210a of the control device 200 facing the stand 100. The mounting hole 250 may be formed on the one side 210a, which is supported by the stand 100, of the control device 200.

The mounting hole 250 may correspond to the first holder 130 of the stand 100. The mounting hole 250 may be provided to be mounted on the first holder 130 of the stand 100. The mounting hole 250 may be provided to be locked to the first holder 130 of the stand 100. The mounting hole 250 may be removably coupled to the first holder 130 of the stand 100. An edge of the mounting hole 250 may be provided to interfere with the first holder 130 of the stand 100.

The control device 200 may include the stopper 260. The stopper 260 may be arranged spaced apart from the mounting hole 250. The stopper 260 may be formed on one side of the control device 200. The stopper 260 may be formed on the one side 210a, which faces the stand 100, of the control device 200. The stopper 260 may be formed on the one side 210a, which is supported by the stand 100, of the control device 200. For example, the stopper 260 may be provided as a hole.

The stopper 260 may correspond to the second holder 150 of the stand 100. The stopper 260 may be provided to be mounted on the second holder 150 of the stand 100. The stopper 260 may be provided to be locked to the second holder 150 of the stand 100. The stopper 260 may be removably coupled to the second holder 150 of the stand 100. An edge of the stopper 260 may be provided to interfere with the second holder 150 of the stand 100. The stopper 260 may be provided to restrict the movement of the control device 200 while the first holder 130 is positioned within a first opening 251 of the mounting hole 250. When the control device 200 moves while the second holder 150 is positioned within the stopper 260, the second holder 150 and the edge of the stopper 260 may interfere. Accordingly, the movement of the control device 200 may be restricted.

For example, when a force is applied to the control device 200 in a state in which the control device 200 is mounted on the stand 100, the control device 200 may rotate around the first holder 130. For example, when a force is applied to the control device 200 in a state in which the first holder 130 is positioned within the first opening 251 of the mounting hole 250, the control device 200 may rotate around the first holder 130. When the second holder 150 is positioned within the stopper 260, the rotation of the control device 200 may be prevented as the second holder 150 and the edge of the stopper 260 interfere with each other.

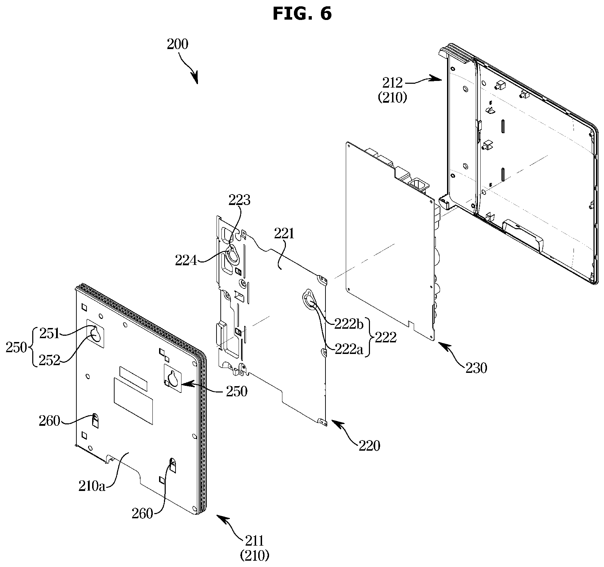

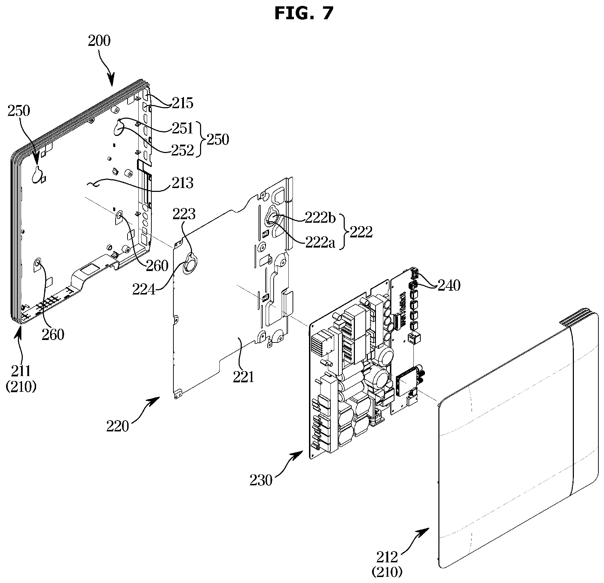

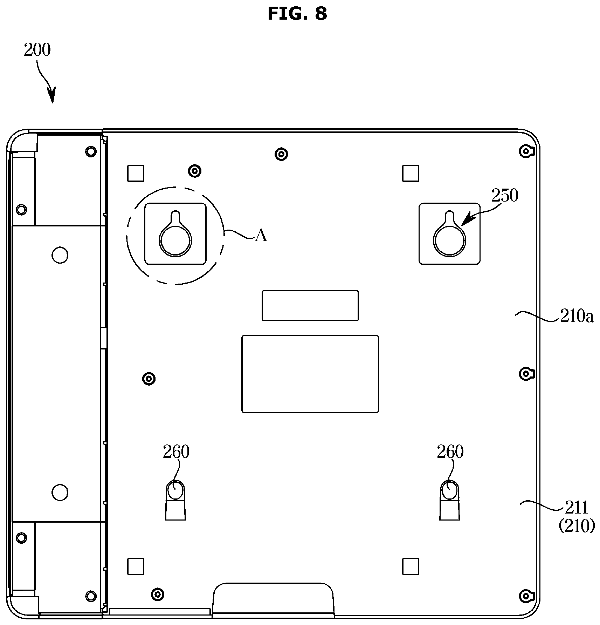

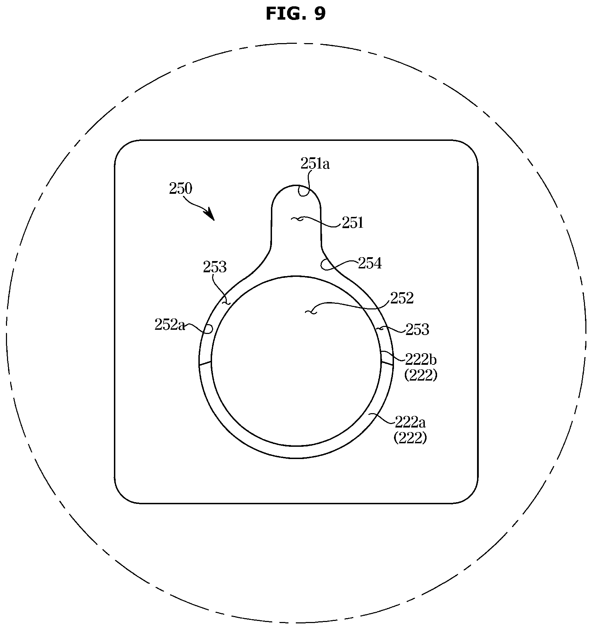

FIG. 6 is an exploded view of an example of the control device according to one embodiment. FIG. 7 illustrates the control device illustrated in FIG. 6 when viewed from another direction. FIG. 8 illustrates one surface of the control device according to one embodiment. FIG. 9 is an enlarged view of a portion A illustrated in FIG. 8.

The control device 200 may include a case 210. The case 210 may form an exterior of the control device 200. The case 210 may be provided to accommodate components for the operation of the control device 200. For example, the case 210 may have a substantially box shape.

For example, the case 210 may include a first case 211 and a second case 212. For example, the first case 211 and the second case 212 may be removably coupled. However, the present disclosure is not limited thereto, and the first case 211 and the second case 212 may be formed integrally.

For example, the first case 211 may form an accommodation space 213, and the second case 212 may be provided to cover the accommodation space 213. However, the present disclosure is not limited thereto, and alternatively, the second case 212 may form the accommodation space 213, and the first case 211 may be provided to cover the accommodation space 213. **In** addition, the accommodation space 213 may be formed as the first case 211 and the second case 212 are coupled to each other.

The mounting hole 250 may be formed on the one side 210a, which is supported by the stand 100, of the control device 200. For example, the mounting hole 250 may be formed as a portion of the case 210 is cut off. For example, the first case 211 may form the mounting hole 250.

The mounting hole 250 may include the first opening 251 and a second opening 252 extending from the first opening 251. The second opening 252 may extend downward from the first opening 251. A size of the second opening 252 may be greater than a size of the first opening 251. For example, the mounting hole 250 may have a substantially gourd shape. For example, a center of the first opening 251 and a center of the second opening 252 may be provided on a substantially same vertical line.

An edge 251a forming the first opening 251 and an edge 252a forming the second opening 252 may be arranged to be connected. For example, a curved portion 254 may be formed between the edge 251a forming the first opening 251 and the edge 252a forming the second opening 252.

The mounting hole 250 may include a rail 253 (refer to FIG. 9). The first holder 130 may be positioned in the first opening 251 of the mounting hole 250 by being guided by the rail 253. For example, the rail 253 may have a shape extending along the edge 252a of the second opening 252. For example, the rail 253 may be formed as a portion of the second opening 252 is covered. For example, the rail 253 may be formed by a cover portion 222 of an inner plate 220 to be described later. For example, the rail 253 may mean an area of the second opening 252 that is not covered by the cover portion 222. However, the second opening 252 may not be covered by the cover portion 222, and the rail 253 may not be formed. That is, the rail 253 may be omitted.

The stopper 260 may be formed on the one side 210a, which is supported by the stand 100, of the control device 200. For example, the stopper 260 may be formed as a portion of the case 210 is cut off. For example, the first case 211 may form the stopper 260.

In the drawing, it is illustrated that the stopper 260 has a hole having a substantially oval shape, but is not limited thereto. As long as the stopper 260 limits the movement of the control device 200 while the control device 200 is mounted on the stand 100, the shape of the stopper 260 is not limited.

Meanwhile, in the drawing, it is illustrated that the first case 211 is supported by the stand 100 and forms the mounting hole 250 and the stopper 260, but is not limited thereto. Unlike the drawing, the second case 212 may be provided to be supported by the stand 100 and form the mounting hole 250 and the stopper 260.

The control device 200 may include a cooling hole 214. The cooling hole 214 may be formed in the case 210. The cooling hole 214 may be provided to discharge heat generated in a substrate assembly 230 to be described later to the outside of the case 210. For example, the cooling hole 214 may be formed in the edge of the case 210. However, as long as the cooling hole 214 discharges heat inside the control device 200, a location of the cooling hole 214 is not limited. For example, a plurality of the cooling hole 214 may be provided.

The control device 200 may include a port hole 215. The port hole 215 may be formed in the case 210. The port hole 215 may be provided to correspond to a terminal 240 to be described later. Various connectors, cables, etc. may be connected to the terminal 240 through the port hole 215. For example, a plurality of the port hole 215 may be provided. For example, the port hole 215 may have various shapes depending on the type of the port 240.

The control device 200 may include an inner plate 220. The inner plate 220 may be accommodated in the case 210. The inner plate 220 may be disposed inside the case 210. The inner plate 220 may be provided in the accommodation space 213. For example, the inner plate 220 may be disposed between the first case 211 and the substrate assembly 230.

For example, the inner plate 220 may provide electromagnetic interference (EMI) shielding. For example, the inner plate 220 may be provided to efficiently dissipate heat generated in the substrate assembly 230.

The inner plate 220 may be disposed adjacent to the one side 210a, which is supported by the stand 100, of the control device 200.

The inner plate 220 may include a plate body 221. For example, the plate body 221 may be arranged to correspond to the one side 210a, which is supported by the stand 100, of the control device 200. For example, the plate body 221 may have a substantially plate shape.

For example, the inner plate 220 may include a mounting hole corresponding portion 222, 223, and/or 224 formed in the plate body 221 to correspond to the mounting hole 250. For example, the mounting hole corresponding portion may be provided as a component of the mounting hole 250. For example, the mounting hole corresponding portion may be provided to form a portion of the mounting hole 250. The mounting hole 250 may be formed by the first case 211 and the inner plate 220. However, the inner plate 220 may not include the mounting hole corresponding portion. In this case, the mounting hole 250 may be formed by the first case 211.

For example, the inner plate 220 may include a third opening 223 provided to correspond to the first opening 251. For example, the third opening 223 may be provided to have substantially the same shape and size as the first opening 251 and thus the third opening 223 may overlap the first opening 251.

For example, the inner plate 220 may include a fourth opening 224 provided to correspond to the second opening 252. For example, the fourth opening 224 may be provided to have substantially the same shape and size as a portion of the second opening 252, and the fourth opening 224 may overlap the second opening 252.

For example, the inner plate 220 may include the cover portion 222. For example, the cover portion 222 may be provided to cover a portion of the second opening 252. For example, when the cover portion 222 covers a portion of the second opening 252, the rail 253 may be formed. For example, the cover portion 222 may include a first cover portion 222a and a second cover portion 222b. The first cover portion 222a may protrude from the plate body 221 in a direction away from the mounting hole 250. The second cover portion 222b may extend from the first cover portion 222a to be substantially parallel to the plate body 221. For example, the cover portion 222 may not be provided as a single component of the inner plate 220, but may be provided as a single component of the first case 211. At this time, the fourth opening 224 may be provided with substantially the same shape and size as the entire second opening 252.

The control device 200 may include the substrate assembly 230. The substrate assembly 230 may be accommodated in the case 210. The substrate assembly 230 may be disposed inside the case 210. The substrate assembly 230 may be provided in the accommodation space 213.

For example, the substrate assembly 230 may include a substrate, and at least one electronic component mounted on the substrate. For example, the substrate assembly 230 may include a light source driver, a power driver, a transceiver, and a temperature sensor.

The control device 200 may include the port 240. The port 240 may be connected to a cable and/or connector for connection with a peripheral device. The port 240 may be connected to a cable and/or connector for connection with the display 10. For example, one end of the cable 20 may be connected to the display 10, and the other end of the cable 20 may be connected to the port 240 of the control device 200. For example, the port 240 may include various types of ports such as high-definition multimedia interface (HDMI), audio optical terminal, universal serial bus (USB), local area network (LAN), etc. For example, the port 240 may be provided in the substrate assembly 230.

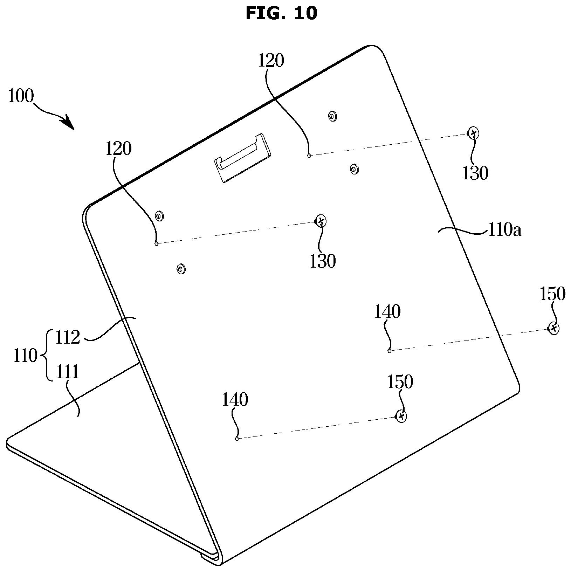

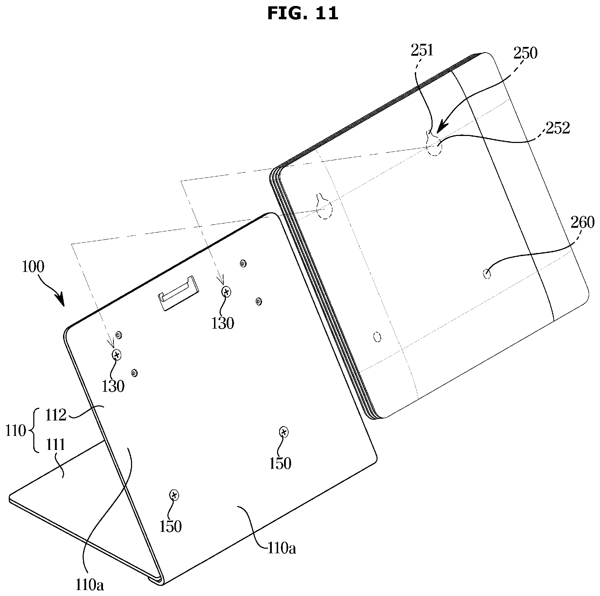

FIG. 10 illustrates a process of coupling a holder to a stand body. FIG. 11 illustrates a process of mounting the control device on the stand.

Referring to FIG. 10, the stand 100 may include the stand body 110. The stand 100 may include the first holder 130. The stand 100 may include the second holder 150.

The stand 100 may include a first coupling hole 120. The first coupling hole 120 may be formed in the stand body 110. For example, the first coupling hole 120 may be formed to penetrate the stand body 110.

The first holder 130 may be provided to correspond to the first coupling hole 120. The first holder 130 may be provided to be fixed to the first coupling hole 120. The first holder 130 may be removably coupled to the first coupling hole 120. For example, the first holder 130 may be screw-fastened to the first coupling hole 120.

A portion of the first holder 130 may be inserted into the first coupling hole 120. Another portion of the first holder 130 may protrude from the stand body 110.

The stand 100 may include a second coupling hole 140. The second coupling hole 140 may be formed in the stand body 110. For example, the second coupling hole 140 may be formed to penetrate the stand body 110.

The second holder 150 may be provided to correspond to the second coupling hole 140. The second holder 150 may be provided to be fixed to the second coupling hole 140. The second holder 150 may be removably coupled to the second coupling hole 140. For example, the second holder 150 may be screw-fastened to the second coupling hole 140.

A portion of the second holder 150 may be inserted into the second coupling hole 140. Another portion of the second holder 150 may protrude from the stand body 110.

The ordinal numbers "first" and "second" in the first coupling hole 120 and the second coupling hole 140 do not limit the configurations of the first coupling hole 120 and the second coupling hole 140. For example, the first coupling hole 120 and the second coupling hole 140 may be named oppositely as the second coupling hole 120 and the first coupling hole 140.

Referring to FIG. 11, the control device 200 may be mounted on the stand 100. For example, the control device 200 may move downward to allow the mounting hole 250 to be locked to the first holder 130. As the first holder 130 is provided in the first opening 251, the control device 200 may be mounted on the stand 100. As the first holder 130 is positioned in the first opening 251, the control device 200 may be hung on the stand 100.

For example, when the control device 200 moves downward in a state in which the second opening 252 of the mounting hole 250 corresponds to the first holder 130, the first holder 130 may be provided to be positioned within the first opening 251. For example, while the control device 200 is mounted on the stand 100, the first holder 130 may be arranged to be positioned within the first opening 251 through the second opening 252. For example, the first holder 130 may be guided by the edge of the mounting hole 250. The first holder 130 may be arranged to be positioned within the first opening 251 by being guided by the edge 252a forming the second opening 252. That is, as the mounting hole 250 moves while the first holder 130 is fixed, the first holder 130 may be arranged to be positioned within the first opening 251 by naturally passing through the second opening 252 due to the shape of the mounting hole 250. For example, the control device 200 may naturally move downward due to gravity.

In a state in which the first holder 130 is positioned within the first opening 251, the second holder 150 may be positioned within the stopper 260. As the control device 200 moves to allow the first holder 130 to be positioned within the mounting hole 250, the second holder 150 may also be naturally positioned within the stopper 260.

In the related art, a stand may include a bolt and nut connection structure for mounting a control device (or electronic device). However, in order to mount the control device (or electronic device) on the stand, there may be an inconvenience of having to assemble the bolt and nut. In order to separate the control device (or electronic device) mounted on the stand, there may be an inconvenience of having to disassemble the bolt and nut.

In contrast, according to the present disclosure, it may be easy to mount the control device 200 on the stand 100. By simply placing the control device 200 on the stand 100 in a state in which the mounting hole 250 and the first holder 130 correspond to each other, the mounting hole 250 may be provided to be locked to the first holder 130. That is, the first holder 130 may be naturally positioned in the first opening 251 of the mounting hole 250. In addition, according to the present disclosure, it may be easy to separate the control device 200, which is mounted on the stand 100, from the stand 100. Simply by lifting the control device 200 from the stand 100 in a state in which the first holder 130 is positioned in the first opening 251 of the mounting hole 250, the mounting hole 250 may become a state in which the mounting hole 250 is not locked to the first holder 130. That is, the first holder 130 may be naturally positioned in the second opening 252 of the mounting hole 250. In a state in which the first holder 130 and the second opening 252 correspond to each other, a user can easily separate the control device 200 from the stand 100. As a result, the usability of the stand 100 and the control device 200 may be improved.

In the related art, a stand may form a seating groove (or pocket) for accommodating a control device. For example, the stand may include a support surface for supporting the control device and an edge protruding from four corners of the support surface to form the seating groove. However, at least two or more frames may be required to form the seating groove in the stand, which may cause additional costs. In addition, because the seating groove is formed in the stand, a portion of the stand may have a protruding shape. As a result, a thickness of the stand may be increased, and the appearance of the stand may be deteriorated.

According to the present disclosure, the stand 100 does not need to form a seating groove, and may not require additional components for forming the seating groove. Accordingly, a cost-saving effect may be obtained. A material cost and assembly cost of the stand 100 may be reduced. In addition, because the seating groove is omitted from the stand 100, the stand 100 may be implemented with a slim design. For example, the support body 112 of the stand 100 may have a substantially plate shape so as to correspond to one surface of the control device 200. That is, the stand 100 may not have a protruding shape. Accordingly, the thickness of the stand 100 may be reduced, and the stand 100 may be implemented with a slim design.

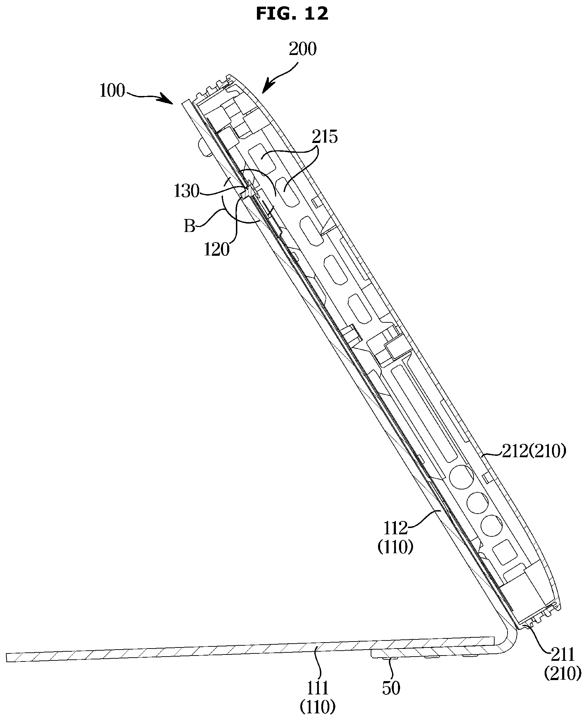

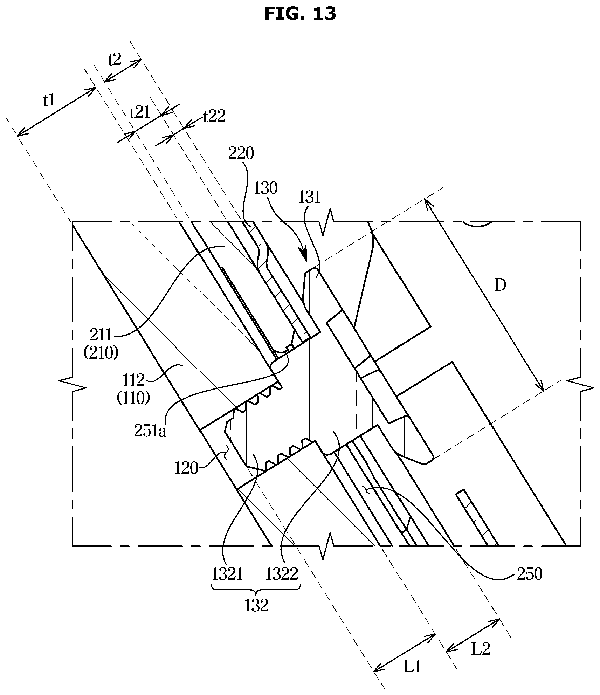

FIG. 12 is a cross-sectional view of an example of the stand and the control device according to one embodiment. FIG. 13 is an enlarged view of a portion B illustrated in FIG. 12.

Referring to FIGS. 12 and 13, the control device 200 may be supported by the stand body 110. The control device 200 may be supported by the support body 112.

The first holder 130 may include a holder body 132. The first holder 130 may include a holder head 131.

The holder body 132 may include a first holder body 1321. The first holder body 1321 may be removably coupled to the first coupling hole 120. The first holder body 1321 may be provided within the first coupling hole 120. The first holder body 1321 may be inserted into the first coupling hole 120.

For example, a screw thread may be formed on an outer circumferential surface of the first holder body 1321. For example, the first holder body 1321 may be screw-coupled to the first coupling hole 120. For example, the first coupling hole 120 may include screw threads (not shown) that are provided to engage with the screw threads of the first holder body 1321. However, the present disclosure is not limited thereto, and the first holder body 1321 may be fastened to the first coupling hole 120 in various ways.

For example, the first holder body 1321 may be fixed to the stand body 110 so as to support a weight of the control device 200.

For example, a length L1 of the first holder body 1321 may be less than a thickness t1 of one side, in which the first coupling hole 120 is formed, of the stand body 110. It is possible to prevent that the first holder body 1321 passes through the first coupling hole 120 and protrudes from the stand body 110.

The holder body 132 may include a second holder body 1322. The second holder body 1322 may extend from the first holder body 1321. The second holder body 1322 may protrude from the stand body 110. For example, when the first holder body 1321 is coupled to the first coupling hole 120, the second holder body 1322 may extend from the first holder body 1321 and protrude from the stand body 110.

For example, the second holder body 1322 may be provided within the mounting hole 250. For example, the second holder body 1322 may be provided to be positioned within the first opening 251. For example, the second holder body 1322 may be provided to be locked to the mounting hole 250. For example, the second holder body 1322 may be provided to interfere with the edge of the mounting hole 250. For example, the second holder body 1322 may be provided to interfere with the edge 251a of the first opening 251. For example, the second holder body 1322 may be provided to support an upper portion of the edge 251a of the first opening 251. For example, a screw thread may not be formed on an outer circumferential surface of the second holder body 1322. However, the present disclosure is not limited thereto, and in some cases, a screw thread may be formed on the outer circumferential surface of the second holder body 1322.

For example, the second holder body 1322 may be provided to have a length that allows the control device 200 to be locked thereto.

For example, a length L2 of the second holder body 1322 may be greater than a thickness t2 of one side, on which the mounting hole 250 is formed, of the control device 200. For example, the length L2 of the second holder body 1322 may be greater than a thickness t21 of the first case 211. For example, the length L2 of the second holder body 1322 may be greater than a thickness t22 of the inner plate 220. The second holder body 1322 may be provided within the mounting hole 250 to support the control device 200. The second holder body 1322 may support at least a portion of the edge 251a of the first opening 251.

For example, a diameter of the second holder body 1322 may be greater than a maximum diameter of the first holder body 1321. For example, the diameter of the second holder body 1322 may be greater than a diameter of the first coupling hole 120. Accordingly, the second holder body 1322 may be provided to form a locking protrusion so as not to be inserted into the first coupling hole 120.

The holder head 131 may extend from the holder body 132. The holder head 131 may extend from the second holder body 1322. The holder head 131 may be arranged to pass through the mounting hole 250 and be positioned within the case 210 of the control device 200. For example, the holder head 131 may be provided to pass through the second opening 252 and positioned within the case 210.

For example, a diameter D of the holder head 131 may be smaller than the size of the second opening 252 of the mounting hole 250. The holder head 131 may pass through the second opening 252 and be provided on the inside of the case 210 of the control device 200.

For example, the diameter D of the holder head 131 may be larger than the size of the first opening 251 of the mounting hole 250. The holder head 131 may be provided not to pass through the first opening 251 in a state in which the second holder body 1322 is provided within the first opening 251. Accordingly, when the control device 200 is mounted on the stand 100, the mounting hole 250 may not be easily separated from the first holder 130.

Meanwhile, the holder body 132 may be referred to as a bolt body 132. The first holder body 1321 may be referred to as a first bolt body 1321. When a screw thread is formed on the first holder body 1321, the first holder body 1321 may be referred to as a screw portion 1321. The second holder body 1322 may be referred to as a second bolt body 1322. The second holder body 1322 may be referred to as a shank portion 1322. The holder head 131 may be referred to as a bolt head 131.

However, although not shown in the drawing, the second holder 150 may have the same configuration and shape as the first holder 130. The second holder 150 may have substantially the same configuration as the holder body 132 of the first holder 130 described above. The second holder 150 may include substantially the same configuration as the holder head 131 of the first holder 130 described above.

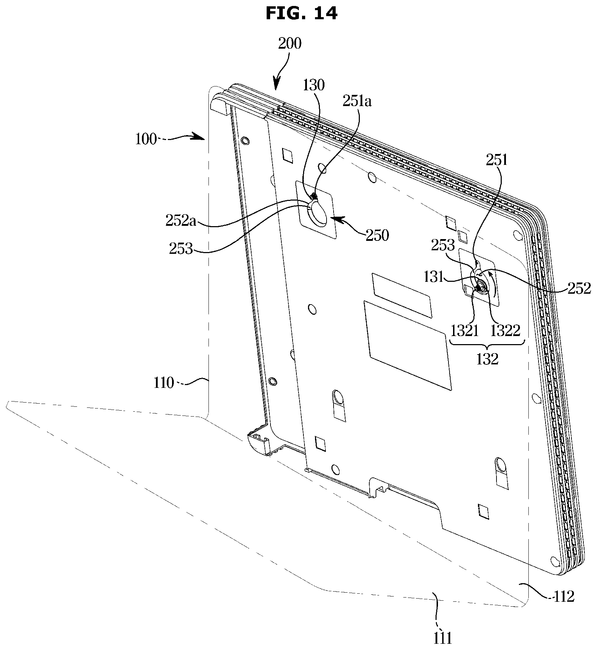

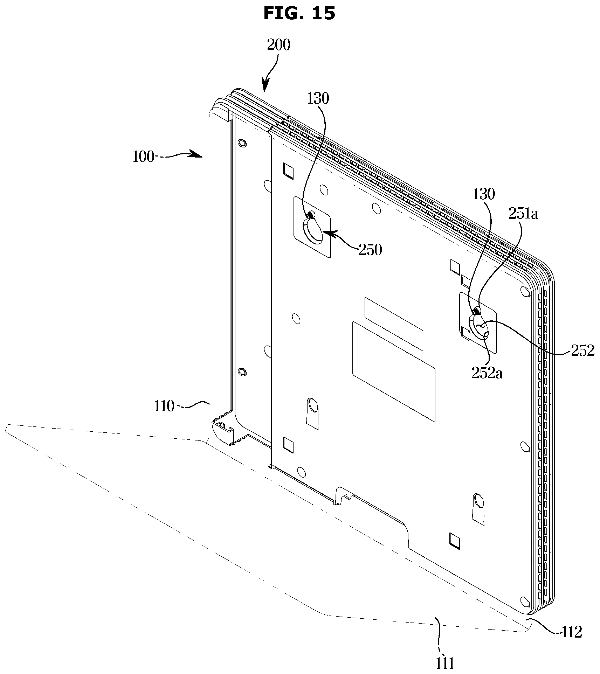

FIG. 14 illustrates a state in which the control device is separated from the stand. FIG. 15 illustrates a state in which the control device illustrated in FIG. 14 returns to its original position.

Referring to FIG. 14, the control device 200 may deviate from its original position by an external force while mounted on the stand 100.

The control device 200 may be applied with external forces due to various factors. For example, when a user connects the control device 200 to the display 10 and/or a peripheral device, a force may be applied to the control device 200. For example, when the control device 200 collides with and/or interferes with another component (e.g., a peripheral device, a structure such as a wall, etc.), a force may be applied to the control device 200.

For example, a state in which the control device 200 is provided in the original position may mean a state in which the first holder 130 is provided in the first opening 251 of the mounting hole 250. For example, the state in which the control device 200 is provided in the original position may mean a state in which the second holder body 1322 is positioned within the first opening 251. For example, when the control device 200 is provided in the original position, the control device 200 may be stably mounted on the stand 100.

For example, a state in which the control device 200 deviates from the original position may mean a state in which the first holder 130 is positioned in the second opening 252 of the mounting hole 250. For example, the state in which the control device 200 deviates from the original position may mean a state in which the second holder body 1322 is positioned within the second opening 252. For example, when a force is applied to the control device 200, the first holder 130 may come out of the first opening 251 and be positioned within the second opening 252 as the mounting hole 250 moves.

As mentioned above, the mounting hole 250 may include the first opening 251 and the second opening 252 provided below the first opening 251 and larger than the first opening 251. The edge 251a of the first opening 251 and the edge 252a of the second opening 252 may be provided to be smoothly connected. Due to the shape of the mounting hole 250, the control device 200 may be provided to easily return to the original position even when the control device 200 deviates from the original position.

As the control device 200 moves downward by gravity in a state in which the first holder 130 is provided in the second opening 252 of the mounting hole 250, the mounting hole 250, which is a component of the control device 200, may also move downward. As the mounting hole 250 moves downward, the first holder 130 may be provided to be guided by the edge of the mounting hole 250 (refer to an arrow in FIG. 14). For example, the first holder 130 may be provided to be guided by the edge 252a of the second opening 252. In other words, as the mounting hole 250 moves while the first holder 130 is fixed, the first holder 130 may be naturally positioned within the first opening 251 which is narrower than the second opening 252.

Referring to FIG. 15, the control device 200 may be returned to the original position. The first holder 130 may be provided to be positioned within the first opening 251. The second holder body 1322 may be provided to be positioned within the first opening 251.

In the related art, a stand may form a seating groove (or pocket) for receiving a control device. For example, the control device may be placed in the seating groove. For example, when a force is applied to the control device provided in the seating groove of the stand, the control device may be separated from the seating groove of the stand and fall from the stand. For example, the control device may be damaged by the impact when the control device falls from the stand.

In contrast, according to the present disclosure, even when the control device 200 is applied with external forces while being mounted on the stand 100, the control device 200 may not be easily separated from the stand 100. Even when the control device 200 is separated from the original position, the control device 200 may be easily returned to the original position. For example, even when the first holder 130 is separated from the first opening 251, the first holder 130 may be arranged to be positioned within the first opening 251 again as the control device 200 moves.

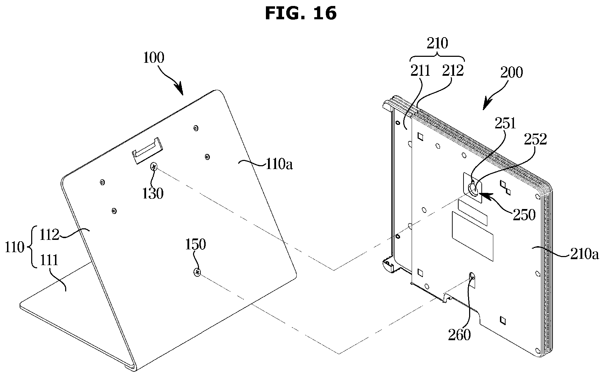

FIG. 16 is a perspective view of an example of a stand and a control device according to one embodiment.

The same reference numerals may be assigned to components the same as the components of the stand and the control device illustrated in FIGS. 1 to 15, and a description thereof will be omitted.

Referring FIG. 16, a stand 100 may include a single first holder 130. For example, the first holder 130 may be arranged substantially at a center portion along the left and right direction (Y direction) of the stand 100. However, the present disclosure is not limited thereto, and the first holder 130 may be arranged at a biased position from the center portion of the stand 100. The stand 100 may include a single second holder 150. For example, the second holder 150 may be arranged substantially at the center portion along the left and right direction (Y direction) of the stand 100. However, the present disclosure is not limited thereto, and the second holder 150 may be arranged at a biased position from the center portion of the stand 100.

Referring to FIG. 16, a control device 200 may include a single mounting hole 250 corresponding to the single first holder 130. The control device 200 may include a single stopper 260 corresponding to the single second holder 150.

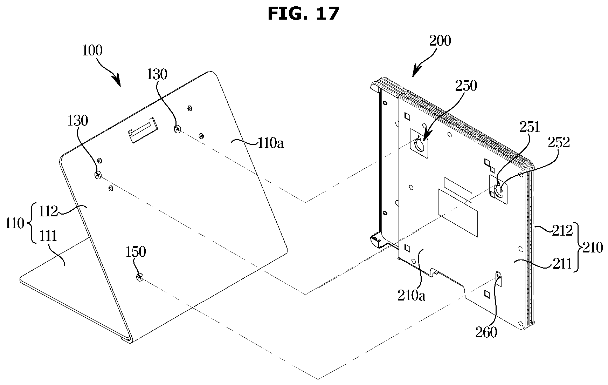

FIG. 17 is a perspective view of an example of a stand and a control device according to one embodiment.

The same reference numerals may be assigned to components the same as the components of the stand and the control device illustrated in FIGS. 1 to 15, and a description thereof will be omitted.

Referring to FIG. 17, a stand 100 may include a plurality of first holders 130. For example, the plurality of first holders 130 may be arranged to be spaced apart from each other substantially in the left and right direction (Y direction). In FIG. 17, it is illustrated that two first holders 130 are provided, but is not limited thereto. Three or more first holders 130 may be provided. The stand 100 may include a single second holder 150. For example, the second holder 150 may be provided to be positioned on the same vertical line as one of the plurality of first holders 130. However, the present disclosure is not limited thereto, and the second holder 150 may be provided to be positioned between one of the plurality of first holders 130 and another one of the plurality of first holders 130.

Referring to FIG. 17, a control device 200 may include a plurality of mounting holes 250 corresponding to the plurality of first holders 130. The control device 200 may include a single stopper 260 corresponding to the single second holder 150.

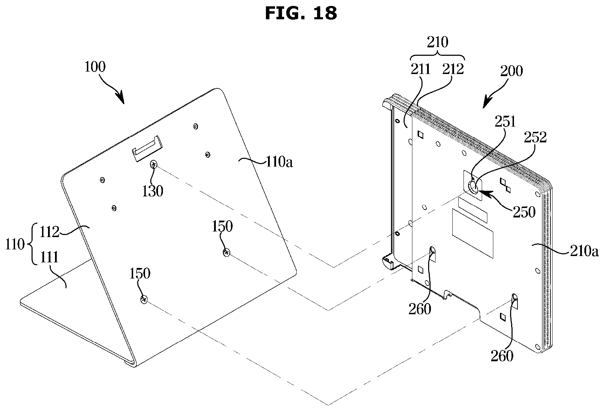

FIG. 18 is a perspective view of an example of a stand and a control device according to one embodiment.

The same reference numerals may be assigned to components the same as the components of the stand and the control device illustrated in FIGS. 1 to 15, and a description thereof will be omitted.

Referring to FIG. 18, a stand 100 may include a single first holder 130. For example, the first holder 130 may be arranged substantially at the center portion along the left and right direction (Y direction) of the stand 100. However, the present disclosure is not limited thereto, and the first holder 130 may be arranged at a biased position from the center portion of the stand 100. The stand 100 may include a plurality of second holders 150. For example, the plurality of second holders 150 may be arranged to be spaced apart from each other substantially in the left and right direction (Y direction). In FIG. 18, it is illustrated that two second holders 150 are provided, but is not limited thereto. Three or more second holders 150 may be provided. For example, the first holder 130 may be provided to be positioned between one of the plurality of second holders 150 and another one of the plurality of second holders 150. However, the present disclosure is not limited thereto, and the first holder 130 may be arranged to be positioned on the same vertical line as one of the plurality of second holders 150.

Referring to FIG. 18, a control device 200 may include a single mounting hole 250 corresponding to the single first holder 130. The control device 200 may include a plurality of stoppers 260 corresponding to the plurality of second holders 150.

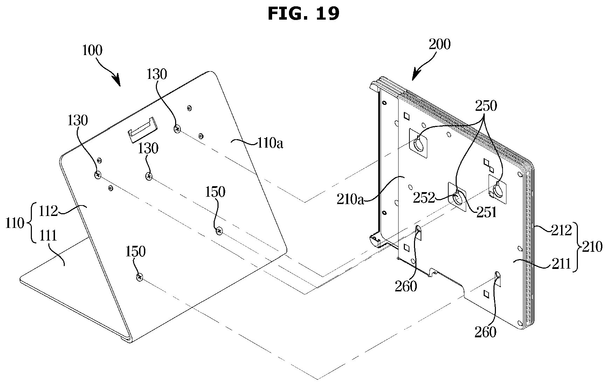

FIG. 19 is a perspective view of an example of a stand and a control device according to one embodiment.

The same reference numerals may be assigned to components the same as the components of the stand and the control device illustrated in FIGS. 1 to 15, and a description thereof will be omitted.

Referring to FIG. 19, a stand 100 may include a plurality of first holders 130. For example, some of the plurality of first holders 130 may be arranged in a first row, and other of the plurality of first holders 130 may be arranged in a second row. For example, some of the plurality of first holders 130 may be arranged in a first column, and other of the plurality of first holders 130 may be arranged in a second column. In FIG. 19, it is illustrated that three first holders 130 are provided, but is not limited thereto.

For example, as illustrated in FIG. 19, when three first holders 130 are provided, two first holders 130 may be arranged in the same row, and the remaining one first holder 130 may be arranged in a different row. For example, as illustrated in FIG. 19, each of the plurality of first holders 130 may be arranged in a different column. However, this is merely exemplary, and the positions of the first holders 130 are not limited thereto. For example, unlike FIG. 19, all three first holders 130 may be arranged in the same row. For example, unlike FIG. 19, all three first holders 130 may be arranged in the same column.

Referring to FIG. 19, the stand 100 may include a plurality of second holders 150. For example, some of the plurality of second holders 150 may be arranged in a first row, and other of the plurality of second holders 150 may be arranged in a second row. For example, some of the plurality of second holders 150 may be arranged in a first column, and other of the plurality of second holders 150 may be arranged in a second column. In FIG. 19, it is illustrated that two second holders 150 are provided, but is not limited thereto.

For example, as illustrated in FIG. 19, a plurality of second holders 150 may be arranged to be spaced apart from each other substantially in the left and right direction (Y direction). For example, as illustrated in FIG. 19, when two second holders 150 are provided, the two second holders 150 may be arranged in the same row. For example, as illustrated in FIG. 19, the two second holders 150 may be arranged in different columns. However, this is merely exemplary, and the positions of the second holders 150 are not limited. For example, unlike FIG. 19, the two second holders 150 may be arranged in different rows. For example, unlike FIG. 19, the two second holders 150 may be arranged in the same column.

Referring to FIG. 19, the control device 200 may include a plurality of mounting holes 250 corresponding to the plurality of first holders 130. The control device 200 may include a plurality of stoppers 260 corresponding to the plurality of second holders 150.

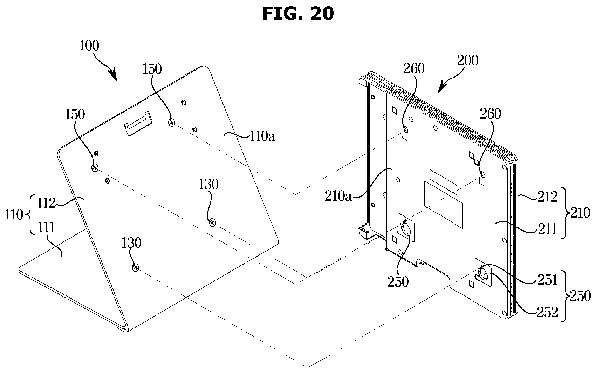

FIG. 20 is a perspective view of an example of a stand and a control device according to one embodiment.

The same reference numerals may be assigned to components the same as the components of the stand and the control device illustrated in FIGS. 1 to 15, and a description thereof will be omitted.

Referring to FIG. 20, a stand 100 may include at least one first holder 130. The stand 100 may include at least one second holder 150. For example, the first holder 130 may be positioned spaced downward from the second holder 150. For example, the first holder 130 may be positioned below the second holder 150. For example, the second holder 150 may be positioned spaced upward from the first holder 130. For example, the second holder 150 may be positioned above the first holder 130.

Referring to FIG. 20, a control device 200 may include at least one mounting hole 250 corresponding to the at least one first holder 130. The control device 200 may include at least one stopper 260 corresponding to the at least one second holder 150. For example, the mounting hole 250 may be positioned spaced downward from the stopper 260. For example, the mounting hole 250 may be positioned below the stopper 260. For example, the stopper 260 may be positioned spaced upward from the first holder 130. For example, the stopper 260 may be positioned above the first holder 130.

Also, although not shown in the drawings, the contents described in FIG. 20 may also be applied to the examples shown in FIGS. 16 to 19. For example, the positions of the first holder 130 and the second holder 150 of the stands shown in FIGS. 16 to 19 may be provided oppositely. For example, the positions of the mounting hole 250 and the stopper 260 of the control device 200 shown in FIGS. 16 to 19 may be provided oppositely.

The display apparatus 1 according to one embodiment may include the display 10, the control device 200 connectable to the display, and the stand 100 configured to support the control device. The control device may include the mounting hole 250 formed on one side thereof facing the stand. The stand may include the stand body 110; and the bolt 130 protruding from the stand body and configured to be inserted into the mounting hole and to support the control device on the stand body to prevent the control device from being separated from the stand body. According to the present disclosure, the control device 200 may be easily mounted on the stand 100. The control device 200 may be stably mounted on the stand 100. The control device 200 may not be easily separated from the stand 100 while the control device is mounted on the stand 100.

The mounting hole may include the first opening 251, and the second opening 252 extending downward from the first opening and larger than the first opening.

The bolt 130 may be positioned within the first opening 251 through the second opening 252 while the control device is mounted on the stand.

The bolt 130 may be positioned within the first opening 251 as the control device moves downward, with the second opening being aligned with the bolt.

The stand may further include the coupling hole 120 formed to penetrate the stand body. The bolt may be fixable to the coupling hole.

The bolt may include the first bolt body 1321 removably coupled to the coupling hole. The bolt may include the second bolt body 1332 extending from the first bolt body and protruding from the stand body, the second bolt body provided to allow the mounting hole to be locked thereto

The screw thread may be formed on the outer circumferential surface of the first bolt body.

The length L1 of the first bolt body may be less than the thickness t1 of one side, in which the coupling hole is formed, of the stand body.

The length L2 of the second bolt body may be greater than the thickness t2 of one side, in which the mounting hole is formed, of the control device.

The bolt may further include the bolt head 131 extending from the second bolt body. The bolt head 131 may be provided to be received inside the control device through the mounting hole while the control device is mounted on the stand.

The diameter D of the bolt head may be smaller than the size of the second opening and larger than the size of the first opening.

The bolt may be the first bolt 130. The stand may further include the second bolt 150 spaced apart from the first bolt and protruding from the stand body. The control device may further include the stopper 260 provided to be locked to the second bolt to limit movement of the control device while the bolt is positioned within the mounting hole.

The stand body may include the base 111, and the support body 112 extending obliquely from the base. The support body 112 may be provided to have a plate shape corresponding to one surface of the control device.

The control device may be configured to supply power to the display or configured to connect the display and an external device.

One side of the stand may be provided to support the control device, and the other side of the stand may be provided to support the display.

The display apparatus 1 according to one embodiment may include the display 10, the control device 200 connectable to the display, and the stand 100. The stand 100 may include the stand body 110 provided to support one side of the control device, and the holder 130 protruding from the stand body. The control device may include the mounting hole 250 removably coupled to the holder. The mounting hole 250 may include the first opening 251, and the second opening 252 extending downward from the first opening and larger than the first opening. The control device may be positioned within the first opening while moving downward in a state in which the second opening and the holder correspond to each other.

The stand may further include the coupling hole 120 formed to penetrate the stand body and provided to allow a portion of the holder to be inserted thereinto.

The holder may be the first holder 130, and the stand may further include the second holder 150 spaced apart from the first holder and protruding from the stand body. The control device may further include the stopper 260 that is connectable to the second holder to limit movement of the control device while the first holder is positioned within the first opening.

The stand 100 according to one embodiment may be provided to support the control device including the case 210 and the mounting hole 250 formed on one side of the case. The stand 100 may include the stand body 110, the coupling hole 120 formed to penetrate the stand body, and the bolt 130 provided to be fixed to the coupling hole and provided to correspond to the mounting hole. The bolt may include the first bolt body 1321 provided in the coupling hole, the second bolt body 1322 extending from the first bolt body, and the bolt head 131 extending from the second bolt body. The second bolt body may be provided in the mounting hole. The bolt head may be provided in the case by passing through the mounting hole.

The length L1 of the first bolt body may be less than the thickness t1 of one side, in which the coupling hole is formed, of the stand body. The length L2 of the second bolt body may be greater than the thickness t2 of one side, in which the mounting hole is formed, of the case.

Additional aspects of the disclosure will be set forth in part in the description which follows and, in part, will be obvious from the description, or may be learned by practice of the disclosure.

While the present disclosure has been particularly described with reference to exemplary embodiments, it should be understood by those of skilled in the art that various changes in form and details may be made without departing from the spirit and scope of the present disclosure.

## Claims

1. A display apparatus comprising:
a display;
a control device connectable to the display; and
a stand configured to support the control device,
wherein the control device comprises:
a mounting hole formed on one side thereof facing the stand,
wherein the stand comprises:
a stand body; and
a bolt protruding from the stand body and configured to be inserted into the mounting hole and to support the control device on the stand body to prevent the control device from being separated from the stand body.

2. The display apparatus of claim 1, wherein the mounting hole includes:
a first opening; and
a second opening larger than the first opening and extending downward from the first opening.

3. The display apparatus of claim 2, wherein the bolt is configured to be positioned within the first opening through the second opening while the control device is mounted on the stand.

4. The display apparatus of claim 2, wherein the bolt configured to be positioned within the first opening as the control device moves downward, with the second opening being aligned with the bolt.

5. The display apparatus of claim 1, wherein the stand further includes a coupling hole penetrating the stand body, wherein the bolt is fixable to the coupling hole.

6. The display apparatus of claim 5, wherein the bolt includes:
a first bolt body removably coupled to the coupling hole; and a second bolt body extending from the first bolt body and protruding from the stand body, the second bolt body is configured to allow the mounting hole to be locked thereto.

7. The display apparatus of claim 6, wherein a screw thread is formed on an outer circumferential surface of the first bolt body.

8. The display apparatus of claim 6, wherein a length of the first bolt body is less than a thickness of one side, in which the coupling hole is formed, of the stand body.

9. The display apparatus of claim 6, wherein a length of the second bolt body is greater than a thickness of the side of the control device on which the mounting hole is formed.

10. The display apparatus of claim 6, wherein
the bolt further includes a bolt head extending from the second bolt body and provided to be received inside the control device through the mounting hole while the control device is mounted on the stand.

11. The display apparatus of claim 10, wherein
a diameter of the bolt head is smaller than a size of the second opening and larger than a size of the first opening.

12. The display apparatus of claim 1, wherein
the bolt is a first bolt,
the stand further includes a second bolt spaced apart from the first bolt and protruding from the stand body,
wherein the control device further includes a stopper provided to be locked to the second bolt to limit movement of the control device while the first bolt is positioned within the mounting hole.

13. The display apparatus of claim 1, wherein the stand body includes:
a base; and
a support body extending obliquely from the base and having a plate shape corresponding to a surface of the control device.

14. The display apparatus of claim 1, wherein the control device is configured to supply power to the display or to connect the display and an external device.

15. The display apparatus of claim 1, wherein one side of the stand supports the control device, and another side of the stand supports the display.
